# DEMANDE DE BREVET EUROPEEN

(11) **EP 4 804 384 A1**
(43) Date de publication de la demande: **09.09.2026**
(21) Numéro de dépôt: 26159635.7
(22) Date de dépôt: 19.02.2026
(51) Int. Cl.: H02K 1/2795, H02K 15/035

(54) **MACHINE ELECTRIQUE A FLUX AXIAL AVEC ROTOR AVEC BLOCAGE DES AIMANTS PERMANENTS PAR DEFORMATION**

(30) Priorité: 04.03.2025 FR 2502162
(71) Demandeur: IFP Energies nouvelles, 92500 Rueil-Malmaison (FR)
(72) Inventeur: VENTURI, Stephane, 92852 RUEIL-MALMAISON CEDEX (FR); ZITO, Gianluca, 92852 RUEIL-MALMAISON CEDEX (FR); GINDRE, Sebastien, 92852 RUEIL-MALMAISON CEDEX (FR)
(74) Mandataire: IFP Energies nouvelles

(57) **Abrégé**

L'invention concerne un procédé de montage des aimants permanents dans un corps de rotor et un procédé de fabrication d'un rotor de machine électrique à flux axial, le corps de rotor étant en matériau amagnétique et comprenant des portions annulaires reliées entre elles par des portions radiales (3), les portions radiales (3) créant des ouvertures pour le positionnement desdits aimants permanents (5), chaque portion radiale (3) comprenant une cavité interne radiale (4). On réalise les étapes suivantes :
a) on positionne les aimants permanents (5) dans lesdites ouvertures et les surfaces concaves (7) des aimants permanents (5) sont en vis-à-vis des portions radiales (3) à chaque extrémité circonférentielle de chaque aimant permanent (5) ;
b) on déforme les surfaces externes des portions radiales (3), ces surfaces externes s'insérant ans les surfaces concaves (7).

L'invention concerne aussi un rotor une machine électrique.

## Description

### Domaine technique

L'invention concerne le domaine des machines électriques à flux axial, notamment le montage des aimants dans le corps de rotor et la fabrication du rotor de telles machines.

Ce type de machine électrique à flux axial peut notamment trouver des applications dans des véhicules électriques ou hybrides, tels que les voitures, bus, camion, engins de chantiers. Ce type de machine peut également être utilisé pour des applications stationnaires, telles que des machines de charge industrielles ou des générateurs électriques.

### Technique antérieure

Ces dernières décennies, le développement des machines électriques s'est essentiellement axé sur les machines électriques à flux radial.

Les machines électriques à flux radial comprennent généralement un rotor et un stator coaxiaux, l'un entourant l'autre. Ainsi, le flux magnétique peut passer radialement du rotor vers le stator et inversement, via un entrefer radial qui est défini comme le jeu radial entre le rotor et le stator.

Au contraire, les machines à flux axial se caractérisent par au moins un rotor et au moins un stator qui sont disposés successivement l'un derrière l'autre dans la direction axiale (de l'axe de rotation du rotor), de manière que le chemin du flux magnétique entre le rotor et le stator soit axial. En d'autres termes, le rotor et le stator se font face et sont séparés par un entrefer d'épaisseur axial (ou jeu axial entre le rotor et le stator).

Le rotor des machines électriques à flux axial à aimants permanents comprend généralement des aimants permanents collés sur la culasse rotorique ou insérés dans un corps de rotor, et dans ce cas, les aimants permanents sont séparés par des bras radiaux du corps de rotor. Le stator comprend généralement un corps de stator ferromagnétique comprenant ou non des dents. Un bobinage électrique dans les encoches du stator peut être distribué ou concentrique, c'est-à-dire que chaque bobinage entoure alors une dent.

Dans le contexte du développement des machines à forte densité de puissance et de couple pour la traction électrique ou hybride, notamment pour des applications de véhicules électriques ou hybrides, la topologie des machines à flux axial se positionne parmi celles à plus haut potentiel, notamment en raison de la forte contrainte d'encombrement axial. Les machines électriques à flux axial présentent aussi des intérêts pour les applications stationnaires comme pour les applications éoliennes.

De manière générale, les machines électriques à flux axial permettent des densités de puissance et de couple plus élevées que les machines électriques à flux radial.

Les configurations les plus performantes de machines électriques à flux axial comprennent des aimants permanents insérés ou fixés dans le rotor, ce qui nécessite une solution de fixation. Pour ce faire, les aimants sont généralement collés sur le corps de rotor, soit sur une surface plane sensiblement orthogonale à l'axe de la machine électrique, soit sur la surface de contact lorsque les aimants sont insérés dans des ouvertures du corps de rotor. Cependant, la solution de collage est contraignante en termes de mise en œuvre et de temps de séchage.

On connaît la demande de brevet US 2022255379 A1 qui utilise une pièce externe pour maintenir les aimants permanents en position. Toutefois, le maintien en position peut ne pas être de qualité suffisante.

La demande de brevet US2024/0258853 utilise un matériau de remplissage dans un canal entre les aimants permanents et le corps de rotor. Ce matériau de remplissage se durcit et permet ainsi le maintien en position des aimants permanents. La mise en œuvre de cette solution est néanmoins complexe et nécessite un temps de durcissement du matériau de remplissage.

Le problème technique que l'on se propose de résoudre consiste à proposer une solution de fixation des aimants permanents dans le corps de rotor, de préférence sans collage, tout en assurant la tenue mécanique axiale et sous l'effet de la centrifugation lors de la rotation du rotor.

### Résumé de l'invention

L'invention concerne un procédé de de montage des aimants permanents dans un corps de rotor de machine électrique à flux axial, les aimants permanents comprenant des surfaces concaves s'étendant dans la direction radiale, le corps de rotor étant en matériau amagnétique et comprenant une portion annulaire interne et une portion annulaire externe reliées entre elles par des portions radiales, les portions radiales étant espacées circonférentiellement de manière à créer des ouvertures pour le positionnement desdits aimants permanents dans lesdites ouvertures, chaque portion radiale comprenant une cavité interne radiale. De plus, on réalise au moins les étapes suivantes :
a) on positionne les aimants permanents dans lesdites ouvertures de manière à ce que les surfaces concaves de chaque aimant permanent soient en vis-à-vis des portions radiales ;
b) on déforme les cavités internes radiales des portions radiales de manière à ce que les surfaces externes de ces portions radiales s'insèrent dans les surfaces concaves des aimants permanents de part et d'autre de chaque portion radiale, les surfaces externes formant alors des surfaces convexes.

De préférence, ladite cavité interne radiale de chaque portion radiale a une section circulaire, ovale ou rectangulaire ou carrée avant la déformation de l'étape b) et de préférence une section circulaire ou ovale après la déformation de l'étape b).

Avantageusement, l'étape b) de déformation de chaque portion radiale est réalisée par dudgeonnage, hydroformage ou par application d'une pression mécanique, pneumatique ou hydraulique dans la cavité interne radiale de la portion radiale.

Selon une mise en œuvre de l'invention, la déformation des surfaces externes des portions radiales est continue sur toute la longueur radiale de chaque portion radiale de manière à obtenir un contact entre les aimants permanents et chaque portion radiale sur toute la longueur radiale de la portion radiale.

Selon une autre variante de l'invention, la déformation des surfaces externes est réalisée de manière à ce que le contact entre la portion radiale et les aimants permanents soit discontinu sur la longueur radiale de la portion radiale, les zones de contact étant séparées, de préférence régulièrement, les unes des autres sur la longueur radiale.

Selon une configuration de l'invention, au moins une desdites portions radiales, de préférence chaque portion radiale, comprend des ailettes, les ailettes venant en contact avec les aimants permanents après l'étape b) de déformation.

De manière avantageuse, les portions radiales comprennent un ou des matériaux métalliques.

Additionnellement ou alternativement, les portions radiales comprennent des matériaux non métalliques, préférentiellement composites.

Préférentiellement, un insert, de préférence métallique, est introduit dans la cavité interne radiale d'au moins une portion radiale, de préférence de chaque portion radiale, avant la réalisation de l'étape b).

Avantageusement, l'insert comprend des renforts.

Selon une mise en œuvre de l'invention, l'étape b) est réalisée par la mise en place d'une goupille pour déformer la cavité interne radiale d'au moins une desdites portions radiales, de préférence de chaque portion radiale, la goupille restant à demeure dans le rotor.

L'invention concerne aussi un procédé de fabrication d'un rotor de machine électrique à flux axial comprenant le procédé de montage selon l'une des variantes ou combinaisons de variantes précédentes.

L'invention concerne aussi un rotor de machine électrique à flux axial obtenu par le procédé de fabrication présenté précédemment ou selon le procédé de montage précédent.

L'invention concerne également une machine électrique à flux axial comprenant au moins un rotor tel que décrit précédemment et au moins un stator.

### Liste des figures

D'autres caractéristiques et avantages du procédé, du rotor et de la machine électrique selon l'invention, apparaîtront à la lecture de la description ci-après d'exemples non limitatifs de réalisations, en se référant aux figures annexées et décrites ci-après.
**[****Fig 1****]**

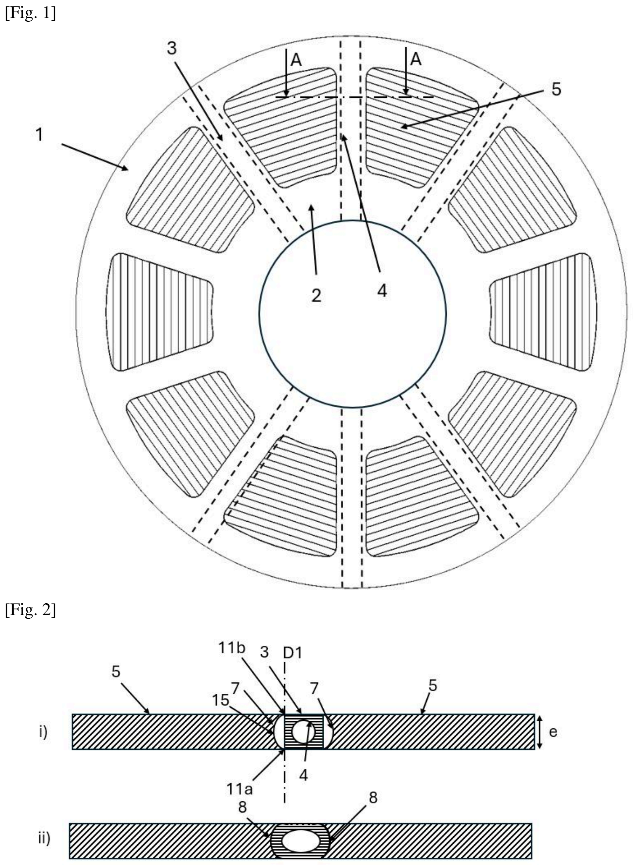

   La [Fig.1] représente une vue du rotor dans un plan orthogonal à la direction axiale d'une première variante d'un rotor de machine électrique selon l'invention.
**[****Fig 2****]**
   La [Fig.2] représente une vue du rotor en coupe AA selon la [Fig.1], avant et après l'étape b) de déformation du procédé de fabrication d'un premier mode de réalisation selon l'invention.
**[****Fig 3****]**

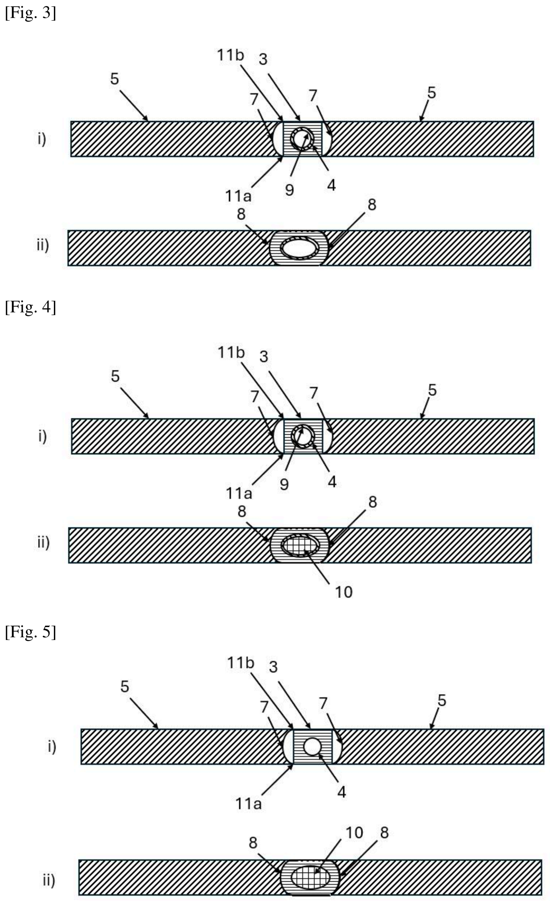

   La [Fig.3] représente une vue du rotor en coupe AA selon la [Fig.1], avant et après l'étape b) de déformation du procédé de fabrication d'un deuxième mode de réalisation selon l'invention.
**[****Fig 4****]**
   La [Fig.4] représente une vue du rotor en coupe AA selon la [Fig.1], avant et après l'étape b) de déformation du procédé de fabrication d'un troisième mode de réalisation selon l'invention.
**[****Fig 5****]**
   La [Fig.5] représente une vue du rotor en coupe AA selon la [Fig.1], avant et après l'étape b) de déformation du procédé de fabrication d'un quatrième mode de réalisation selon l'invention.
**[****Fig 6****]**

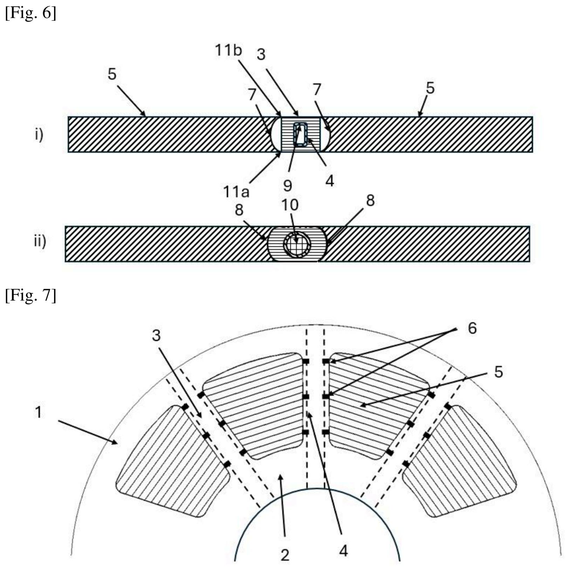

   La [Fig.6] représente une vue du rotor en coupe AA selon la [Fig.1], avant et après l'étape b) de déformation du procédé de fabrication d'un cinquième mode de réalisation selon l'invention.
**[****Fig 7****]**
   La [Fig.7] représente une vue du rotor dans un plan orthogonal à la direction axiale d'une deuxième variante d'un rotor de machine électrique selon l'invention.

### Description des modes de réalisation

La direction « longitudinale » ou « axiale » est la direction de l'axe longitudinal du rotor et de la machine électrique.

L'épaisseur s'entend d'une longueur dans la direction longitudinale.

Les termes « interne » et « externe » s'entendent relativement l'un par rapport à l'autre, le terme interne étant relativement plus proche de l'axe longitudinal (qui sert d'axe de rotation du rotor) que le terme externe.

L'invention concerne un procédé de montage des aimants permanents dans un corps de rotor, de manière à former un rotor de machine électrique à flux axial. Le rotor comprend donc des aimants permanents et un corps de rotor.

Le corps de rotor est en matériau amagnétique et comprend une portion annulaire interne et une portion annulaire externe reliées entre elles par des portions radiales. Les portions radiales sont espacées circonférentiellement de manière à créer des ouvertures (dans le corps de rotor) pour le positionnement desdits aimants permanents dans ces ouvertures.

Les aimants permanents comprennent des surfaces concaves. Ces surfaces concaves s'étendent dans la direction radiale lorsque les aimants permanents sont montés dans les ouvertures du corps de rotor. De ce fait, ces surfaces concaves sont en vis-à-vis des portions radiales du corps de rotor et elles sont telles que, en coupe dans un plan orthogonal à la direction radiale, les sections de ces surfaces concaves forment, chacune, une ligne dont la distance à l'axe rejoignant les extrémités axiales de cette section, est d'abord croissante (strictement croissante de préférence) d'une extrémité axiale de la section jusqu'à un point intermédiaire, puis décroissante (de préférence strictement décroissante) du point intermédiaire jusqu'à l'autre extrémité axiale de la section. De préférence, le point intermédiaire peut être positionné sur la ligne médiane du segment rejoignant les extrémités axiales de la section : en d'autres termes, le point intermédiaire est sensiblement sur un plan médian (correspondant au milieu axial) de l'aimant.

La section d'une même surface concave peut être prolongée sur toute la longueur radiale de cette surface concave : dans ce cas, les sections, dans différents plans de coupe orthogonaux à la direction radiale, peuvent se superposer.

De préférence, les surfaces concaves opposées d'un même aimant peuvent avoir des sections symétriques par rapport à un plan radial de l'aimant permanent.

Le corps de rotor est en matériau amagnétique et comprend une portion annulaire interne, une portion annulaire externe et des portions radiales, les portions annulaires interne et externe étant reliées entre elles par des portions radiales. Les portions radiales sont espacées circonférentiellement de manière à créer des ouvertures pour le positionnement des aimants permanents dans ces ouvertures. Les ouvertures et les aimants sont de section sensiblement trapézoïdale par exemple. Chaque portion radiale comprend une cavité interne radiale qui peut s'étendre sur toute la longueur radiale de la portion radiale ou sur au moins une partie d'elle.

Selon l'invention, on réalise au moins les étapes suivantes :
a) on positionne les aimants permanents dans les ouvertures du corps de rotor de manière à ce que les surfaces concaves de chaque aimant permanent soient en vis-à-vis des portions radiales (à chaque extrémité circonférentielle de chaque aimant permanent) ; à cette étape donc, les ouvertures permettent le passage dans la direction axiale des aimants permanents pour le montage des aimants dans le corps de rotor ;
b) on déforme les cavités internes des portions radiales et ,de fait, on déforme les surfaces externes des portions radiales (la déformation de la cavité interne entraînant la déformation de la surface externe d'une même portion radiale) de manière à ce que les surfaces externes de ces portions radiales s'insèrent, au moins ponctuellement, dans les surfaces concaves des aimants permanents de part et d'autre de la portion radiale, les surfaces externes formant alors des surfaces convexes. En effet, comme pour le montage, il est nécessaire d'avoir une ouverture initiale permettant le passage de l'aimant, il est nécessaire ensuite de bloquer la position de l'aimant dans l'ouverture car le jeu initial existant ne permettrait pas un maintien en position correct de l'aimant en fonctionnement, notamment en raison des effets centrifuges du rotor.

La déformation de la cavité interne permet de déformer la surface externe des différentes portions radiales.

En déformant la surface externe des portions radiales pour qu'elles s'insèrent dans les surfaces concaves, on bloque l'aimant en position. Cela permet de maintenir l'aimant en position, en fonctionnement, sous l'effet d'efforts axiaux ou centrifuges.

La forme convexe des surfaces externes des portions radiales permet d'épouser au mieux la surface concave des aimants permanents. En d'autres termes, la forme convexe des surfaces externes est complémentaire de la surface concave des aimants.

Selon l'étape b), la déformation des surfaces externes/des cavités internes peut être ponctuelle, c'est-à-dire réalisée en un ou plusieurs points ou sur une ou plusieurs zones séparées entre elles, ou elle peut être continue sur toute la longueur radiale de la portion radiale.

De manière avantageuse, la cavité interne de chaque portion radiale peut avoir une section circulaire, ovale ou rectangulaire ou carrée avant la déformation de l'étape b) et de préférence une section circulaire ou ovale après la déformation de l'étape b). Cette déformation de la cavité interne permet de déformer la surface externe. La déformation de la cavité interne des portions radiales peut être ponctuelle, c'est-à-dire réalisée en un ou plusieurs points ou sur une ou plusieurs zones séparées entre elles, ou elle peut être continue sur toute la longueur radiale de la portion radiale de manière à déformer la surface externe, respectivement, de manière ponctuelle ou de manière continue sur toute la longueur radiale de la portion radiale. En effet, la déformation de la cavité interne permet de déformer la surface externe.

Préférentiellement, l'étape b) de déformation de chaque portion radiale peut être réalisée par dudgeonnage, hydroformage ou par application d'une pression mécanique, pneumatique ou hydraulique dans la cavité interne radiale de la portion radiale.

La déformation appliquée à l'étape b) peut générer une déformation rémanente ou résiduelle : en cela, la déformation appliquée est maintenue même après le retrait de l'outillage ou de la pression interne. C'est notamment le cas, par le dudgeonnage, où l'on vient écrouir un matériau métallique (en acier ou acier inoxydable par exemple) par exemple. L'écrouissage généré entraîne une déformation plastique du matériau et donc une déformation résiduelle (aussi appelée « déformation rémanente »).

Le dudgeonnage est une opération mécanique, généralement obtenue à partir d'un outil mécanique, qui consiste à réaliser une expansion de la section interne d'une cavité (circulaire notamment), pour générer une déformation plastique (rémanente).

Alternativement, la déformation appliquée à l'étape b) peut générer une déformation restant dans le domaine élastique du matériau. Dans ce cas, la pression ou l'outillage interne inséré dans la cavité pour générer la déformation est maintenu en position pour assurer le maintien de la déformation au cours du temps. Pour ce faire, on peut notamment utiliser une goupille insérée en force dans la cavité et maintenue en position en fonctionnement du rotor. L'utilisation d'une goupille est toutefois également compatible avec une déformation résiduelle.

Avantageusement, la déformation des surfaces externes (et des cavités internes) des portions radiales peut être continue sur toute la longueur radiale de chaque portion radiale de manière à obtenir un contact entre les aimants permanents et chaque portion radiale sur toute la longueur radiale de la portion radiale. Cette configuration permet un bon maintien en position de l'aimant dans le rotor.

Alternativement, la déformation des surfaces externes (et/ou des cavités internes) est réalisée de manière à ce que le contact entre la portion radiale et les aimants soit discontinu sur la longueur radiale de la portion radiale, les zones de contact étant séparées, de préférence régulièrement, les unes des autres sur la longueur radiale. Dans ce cas, les zones de contacts sont ponctuelles et cela permet de maintenir des espaces séparant les portions radiales des aimants, facilitant le refroidissement, limitant la génération de pertes additionnelles par recirculation de courants, et améliorant les performances électromagnétiques de la machine électrique.

Avantageusement, au moins une desdites portions radiales, de préférence chaque portion radiale, peut comprendre des ailettes, les ailettes venant en contact avec les aimants permanents après l'étape b) de déformation. Les ailettes permettent de générer les zones de contact entre aimants permanents et portions radiales, après déformation. Les espaces séparant les ailettes permettent la circulation d'air pour le refroidissement et pour les performances électromagnétiques de la machine électrique.

Les ailettes peuvent notamment faire saillie en direction des aimants permanents et s'étendre sensiblement circonférentiellement.

Selon une variante de l'invention, les portions radiales peuvent comprendre un ou des matériaux métalliques (en acier ou acier inoxydable par exemple).

Additionnellement ou alternativement, les portions radiales peuvent comprendre des matériaux non métalliques, préférentiellement composites (des fibres de verre noyées dans une résine époxy par exemple). En effet, les portions radiales peuvent être composés de matériaux métalliques, de matériaux composites (des fibres de verre noyées dans une résine époxy par exemple)ou d'une combinaison avec une partie en matériaux composites, tel qu'un composite avec des fibres de verre noyées dans une résine, et une autre partie en matériaux métalliques par exemple.

De manière avantageuse, un insert, de préférence métallique (en acier ou acier inoxydable par exemple), peut être introduit dans la cavité interne radiale d'au moins une portion radiale, de préférence de chaque portion radiale, avant la réalisation de l'étape b). Cet insert permet d'appliquer une pression interne mécanique (par dudgeonnage) ou hydraulique (par un fluide sous pression) à l'intérieur de l'insert. Lorsque l'insert est métallique, il peut s'écrouir et entraîner ainsi une déformation plastique rémanente qui, elle-même, garantit la déformation permanente de la partie composite, en garantissant le maintien en position de l'aimant permanent dans le corps de rotor.

De préférence, l'insert (de préférence métallique) peut comprendre des renforts. La déformation peut être réalisée ponctuellement au niveau des renforts, entraînant ainsi une déformation des surfaces externes au droit des renforts.

Selon une configuration de l'invention, l'étape b) peut être réalisée par la mise en place d'une goupille pour déformer la cavité interne radiale d'au moins une desdites portions radiales, de préférence de chaque portion radiale, la goupille restant à demeure dans le rotor. Ainsi, la goupille peut être mise en place directement dans la cavité interne radiale ou dans l'insert (de préférence métallique). Cette solution permet d'utiliser, pour les portions radiales, un matériau qui ne génère pas de déformation permanente (qui reste dans le domaine élastique du matériau) ou qu'on ne souhaite pas écrouir. Le maintien en position de la goupille permet d'assurer le maintien de la déformation élastique en fonctionnement du rotor.

Pour assurer la déformation de l'étape b), la goupille peut par exemple être insérée en force, notamment avec une masse ou un vérin hydraulique.

L'invention concerne aussi un rotor de machine électrique à flux axial obtenu par le procédé selon l'une des variantes ou combinaisons de variantes décrites précédemment, tant qu'elles restent compatibles entre elles. Ainsi, le rotor comprend des aimants permanents et un corps de rotor. Les aimants permanents comprennent des surfaces concaves s'étendant dans la direction radiale. De plus, le corps de rotor est en matériau amagnétique et comprend une portion annulaire interne et une portion annulaire externe reliées entre elles par des portions radiales, les portions radiales étant espacées circonférentiellement de manière à créer des ouvertures, les aimants permanents étant positionnés dans lesdites ouvertures de manière à ce que les surfaces concaves de chaque aimant permanent soient en vis-à-vis des portions radiales à chaque extrémité circonférentielle de chaque aimant permanent. Chaque portion radiale comprend une cavité interne radiale pour la déformation de la portion radiale concernée. De plus, les surfaces externes des portions radiales forment des surfaces, avec au moins des parties convexes, s'insérant dans les surfaces concaves des aimants permanents de part et d'autre de chaque portion radiale, de manière à bloquer les aimants permanents en position.

L'invention concerne également un procédé de fabrication d'un rotor de machine électrique à flux axial incluant le procédé de montage des aimants permanents dans le rotor selon l'une des variantes ou combinaisons de variantes décrites précédemment.

L'invention concerne également une machine électrique à flux axial comprenant au moins un rotor tel que décrit précédemment et au moins un stator.

La [Fig.1] illustre, de manière schématique et non limitative, une vue du rotor dans un plan orthogonal à la direction axiale d'une première variante d'un rotor de machine électrique selon l'invention.

Le rotor comprend un corps de rotor qui comprend une partie annulaire externe 1 et une partie annulaire interne 2 reliées entre elles par des portions radiales 3 (qui font également partie du corps de rotor). Les portions radiales 3 (ou bras radiaux) sont séparées circonférentiellement de manière à former des ouvertures délimitées, d'une part, par les parties annulaires externe 1 et interne 2, et, d'autre part, par deux portions radiales 3 successives circonférentiellement. Dans ces ouvertures, sont positionnés des aimants permanents 5.

Chaque portion radiale 3 comprend une cavité interne radiale 4 utilisée pour déformer la portion radiale 3 afin de bloquer les aimants permanents 5 en vis-à-vis de cette portion radiale 3.

La [Fig.2] illustre, de manière schématique et non limitative, une vue du rotor en coupe AA selon la [Fig.1], avant et après l'étape b) de déformation du procédé de fabrication d'un premier mode de réalisation selon l'invention.

Le schéma i) représente le montage avant l'étape b).

Le schéma ii) représente le rotor après l'étape b).

Sur le schéma i), on observe que les aimants permanents 5 ont des surfaces concaves 7 en vis-à-vis des portions radiales 3. Ces surfaces concaves 7 sont formées de telle sorte que le jeu initial (avant la déformation de l'étape b) entre l'aimant permanent 5 et la portion radiale 3, croît puis décroît dans le sens de l'épaisseur axiale e (du rotor, du corps de rotor et des aimants permanents), d'une extrémité axiale 11a à l'autre 11b.

La portion radiale 3 a une surface externe qui permet l'insertion des aimants permanents 5, les aimants permanents 5 étant mis en place par un déplacement dans la direction axiale.

Les surfaces concaves 7 sont en vis-à-vis des portions radiales 3 du corps de rotor et elles sont telles que, en coupe dans un plan orthogonal à la direction radiale, les sections de ces surfaces concaves 7 forment, chacune, une ligne dont la distance à l'axe D1 rejoignant les extrémités axiales 11a et 11b de cette section, est d'abord croissante (strictement croissante de préférence) d'une extrémité axiale 11a de la section jusqu'à un point intermédiaire 15, puis décroissante (de préférence strictement décroissante) du point intermédiaire 15 jusqu'à l'autre extrémité axiale 11b de la section. De préférence, le point intermédiaire 15 peut être positionné sur la ligne médiane du segment rejoignant les extrémités axiales 11a et 11b de la section : en d'autres termes, le point intermédiaire 15 est sensiblement sur un plan médian (correspondant au milieu axial) de l'aimant permanent 5.

La portion radiale 3 comprend une cavité interne radiale 4, qui ici a une section circulaire (mais qui pourrait tout autant avoir une section différente), avant la déformation de l'étape b).

Le schéma ii) montre le montage après la déformation de l'étape b), par exemple par dudgeonnage ou par hydroformage dans la cavité interne radiale 4. Ainsi, après cette déformation, telle que représentée, la cavité interne radiale 4 n'est plus circulaire, en coupe en 2D mais ici ovale (alternativement, elle pourrait avoir une section de forme différente). De plus, la surface externe de la portion radiale qui était de section carrée (mais une autre forme pourrait être envisagée) sur le schéma i) comprend des surfaces convexes 8 de chaque côté en vis-à-vis des aimants permanents 5, ces surfaces convexes 8 venant s'insérer dans les surfaces concaves 7 des aimants permanents. Cette déformation peut être continue sur toute la longueur radiale de la portion radiale 3 ou être réalisée sur une ou plusieurs zones « ponctuelles » distinctes séparées les unes des autres.

La déformation obtenue ici est une déformation permanente (dans le domaine plastique du matériau), ce qui permet d'assurer cette déformation après le retrait de l'outil mécanique permettant cette déformation ou après l'arrêt de la pression interne.

La [Fig.3] illustre, de manière schématique et non limitative, une vue du rotor en coupe AA selon la [Fig.1], avant et après l'étape b) de déformation du procédé de fabrication d'un deuxième mode de réalisation selon l'invention.

Les références correspondant aux références utilisées sur les schémas précédent correspondent aux mêmes éléments et ne seront pas nécessairement redétaillés.

Le schéma i) représente le montage avant l'étape b).

Le schéma ii) représente le rotor après l'étape b).

Sur le schéma i), on observe que les aimants permanents 5 ont des surfaces concaves 7 en vis-à-vis des portions radiales 3. Ces surfaces concaves 7 sont formées de telle sorte que le jeu initial (avant la déformation de l'étape b) entre l'aimant permanent 5 et la portion radiale 3, croit puis décroit dans le sens de l'épaisseur axiale e (du rotor, du corps de rotor et des aimants permanents), d'une extrémité axiale 11a à l'autre 11b.

La portion radiale 3 a une surface externe compatible avec l'insertion des aimants permanents 5, les aimants permanents 5 étant mis en place par un déplacement dans la direction axiale.

La portion radiale 3 comprend une cavité interne radiale 4, qui ici a une section circulaire (mais qui pourrait tout autant avoir une section différente), avant la déformation de l'étape b).

Le rotor comprend ici un insert 9, de préférence métallique, afin d'appliquer la pression mécanique, hydraulique ou pneumatique de déformation sur l'insert 9, l'insert permettant de générer la déformation de la cavité interne radiale 4. Le corps de rotor, et notamment les portions radiales 3, peuvent être en matériau non métallique, comme un matériau composite.

Le schéma ii) montre le montage après la déformation de l'étape b), par exemple par dudgeonnage ou par hydroformage dans l'insert 9 qui déforme lui-même la cavité interne radiale 4. Ainsi, après cette déformation, telle que représentée, la cavité interne radiale 4 n'est plus circulaire mais ici ovale (alternativement, elle pourrait avoir une section de forme différente). De plus, la surface externe qui était de section carrée (mais une autre forme pourrait être envisagée) sur le schéma i) comprend des surfaces convexes 8 de chaque côté en vis-à-vis des aimants permanents 5, ces surfaces convexes 8 venant s'insérer dans les surfaces concaves 7 des aimants permanents. Cette déformation peut être continue sur toute la longueur radiale de la portion radiale 3 ou être réalisée sur une ou plusieurs zones « ponctuelles » distinctes séparées les unes des autres.

La déformation obtenue ici est une déformation permanente (dans le domaine plastique du matériau), ce qui permet d'assurer cette déformation après le retrait de l'outil mécanique permettant cette déformation ou après l'arrêt de la pression interne.

La [Fig.4] illustre, de manière schématique et non limitative, une vue du rotor en coupe AA selon la [Fig.1], avant et après l'étape b) de déformation du procédé de fabrication d'un troisième mode de réalisation selon l'invention.

Les références correspondant aux références utilisées sur les schémas précédent correspondent aux mêmes éléments et ne seront pas nécessairement redétaillés.

Le schéma i) représente le montage avant l'étape b).

Le schéma ii) représente le rotor après l'étape b).

Sur le schéma i), on observe que les aimants permanents 5 ont des surfaces concaves 7 en vis-à-vis des portions radiales 3. Ces surfaces concaves 7 sont formées de telle sorte que le jeu initial (avant la déformation de l'étape b) entre l'aimant permanent 5 et la portion radiale 3, croît puis décroît dans le sens de l'épaisseur axiale e (du rotor, du corps de rotor et des aimants permanents), d'une extrémité axiale 11a à l'autre 11b.

La portion radiale 3 a une surface externe qui permet l'insertion des aimants permanents 5, les aimants permanents 5 étant mis en place par un déplacement dans la direction axiale.

La portion radiale 3 comprend une cavité interne radiale 4, qui ici a une section circulaire (mais qui pourrait tout autant avec une section différente), avant la déformation de l'étape b).

Le rotor comprend ici un insert 9, de préférence métallique, afin d'appliquer la pression mécanique, hydraulique ou pneumatique de déformation sur l'insert 9, l'insert permettant de générer la déformation de la cavité interne radiale 4. Le corps de rotor, et notamment les portions radiales 3, peuvent être en matériau non métallique, comme un matériau composite.

Le schéma ii) montre le montage après la déformation de l'étape b), ici par insertion d'une goupille 10 montée à demeure et en force dans l'insert 9 qui déforme lui-même la cavité interne radiale 4. Ainsi, après cette déformation, telle que représentée, la cavité interne radiale 4 n'est plus circulaire mais ici ovale (alternativement, elle pourrait avoir une section de forme différente). De plus, la surface externe qui était de section carrée (mais une autre forme pourrait être envisagée) sur le schéma i) comprend des surfaces convexes 8 de chaque côté en vis-à-vis des aimants permanents 5, ces surfaces convexes 8 venant s'insérer dans les surfaces concaves 7 des aimants permanents. Cette déformation peut être continue sur toute la longueur radiale de la portion radiale 3 ou être réalisée sur une ou plusieurs zones « ponctuelles » distinctes séparées les unes des autres.

Pour faciliter le montage et la déformation de la goupille 10, celle-ci peut comprendre une portion sur laquelle la section (de la goupille 10) passe progressivement de la section circulaire (c'est-à-dire de la section de l'insert 9 avant déformation) à la section ovale (c'est-à-dire de la section de l'insert 9 après déformation). La goupille peut ne pas avoir de section régulière et permettre notamment des points ou zones de contact séparées les uns des autres.

La déformation obtenue ici peut être une déformation permanente (dans le domaine plastique du matériau) ou une déformation restant dans le domaine élastique du matériau. Le fait de maintenir la goupille en position permet d'assurer cette déformation par le maintien en position de la goupille, même dans le cas d'une déformation élastique.

La [Fig.5] illustre, de manière schématique et non limitative, une vue du rotor en coupe AA selon la [Fig.1], avant et après l'étape b) de déformation du procédé de fabrication d'un quatrième mode de réalisation selon l'invention.

Les références correspondant aux références utilisées sur les schémas précédent correspondent aux mêmes éléments et ne seront pas nécessairement redétaillés.

Le schéma i) représente le montage avant l'étape b).

Le schéma ii) représente le rotor après l'étape b).

Sur le schéma i), on observe que les aimants permanents 5 ont des surfaces concaves 7 en vis-à-vis des portions radiales 3. Ces surfaces concaves 7 sont formées de telle sorte que le jeu initial (avant la déformation de l'étape b) entre l'aimant permanent 5 et la portion radiale 3, croît puis décroît dans le sens de l'épaisseur axiale e (du rotor, du corps de rotor et des aimants permanents), d'une extrémité axiale 11a à l'autre 11b.

La portion radiale 3 a une surface externe qui permet l'insertion des aimants permanents 5, les aimants permanents 5 étant mis en place par un déplacement dans la direction axiale.

La portion radiale 3 comprend une cavité interne radiale 4, qui ici a une section circulaire (mais qui pourrait tout autant avec une section différente), avant la déformation de l'étape b).

Le corps de rotor, et notamment les portions radiales 3, peut être en matériau métallique ou non métallique, tel qu'un composite.

Le schéma ii) montre le montage après la déformation de l'étape b), ici par insertion d'une goupille 10 montée à demeure et en force dans la cavité interne radiale 4. Ainsi, après cette déformation, telle que représentée, la cavité interne radiale 4 n'est plus circulaire mais ici ovale (alternativement, elle pourrait avoir une section de forme différente). De plus, la surface externe qui était de section carrée (mais une autre forme pourrait être envisagée) sur le schéma i) comprend des surfaces convexes 8 de chaque côté en vis-à-vis des aimants permanents 5, ces surfaces convexes 8 venant s'insérer dans les surfaces concaves 7 des aimants permanents. Cette déformation peut être continue sur toute la longueur radiale de la portion radiale 3 ou être réalisée sur une ou plusieurs zones « ponctuelles » distinctes séparées les unes des autres.

Pour faciliter le montage et la déformation de la goupille 10, celle-ci peut comprendre une portion sur laquelle la section (de la goupille 10) passe progressivement de la section circulaire (c'est-à-dire de la section de l'insert 9 avant déformation) à la section ovale (c'est-à-dire de la section de l'insert 9 après déformation). La goupille peut ne pas avoir de section régulière et permettre notamment des points ou zones de contact séparées les uns des autres.

La déformation obtenue ici peut être une déformation permanente (dans le domaine plastique du matériau) ou une déformation restant dans le domaine élastique du matériau. Le fait de maintenir la goupille en position permet d'assurer cette déformation par le maintien en position de la goupille, même dans le cas d'une déformation élastique.

La [Fig.6] illustre, de manière schématique et non limitative, une vue du rotor en coupe AA selon la [Fig.1], avant et après l'étape b) de déformation du procédé de fabrication d'un cinquième mode de réalisation selon l'invention.

Les références correspondant aux références utilisées sur les schémas précédent correspondent aux mêmes éléments et ne seront pas nécessairement redétaillés.

Le schéma i) représente le montage avant l'étape b).

Le schéma ii) représente le rotor après l'étape b).

Sur le schéma i), on observe que les aimants permanents 5 ont des surfaces concaves 7 en vis-à-vis des portions radiales 3. Ces surfaces concaves 7 sont formées de telle sorte que le jeu initial (avant la déformation de l'étape b) entre l'aimant permanent 5 et la portion radiale 3, croit puis décroit dans le sens de l'épaisseur axiale e (du rotor, du corps de rotor et des aimants permanents), d'une extrémité axiale 11a à l'autre 11b.

La portion radiale 3 a une surface externe qui permet l'insertion des aimants permanents 5, les aimants permanents 5 étant mis en place par un déplacement dans la direction axiale.

La portion radiale 3 comprend une cavité interne radiale 4, qui ici a une section rectangulaire (mais qui pourrait tout autant avec une section différente), avant la déformation de l'étape b).

Le rotor comprend ici un insert 9, de préférence métallique, afin d'appliquer la pression mécanique, hydraulique ou pneumatique de déformation sur l'insert 9, l'insert permettant de générer la déformation de la cavité interne radiale 4. Le corps de rotor, et notamment les portions radiales 3, peuvent être en matériau non métallique, comme un matériau composite.

Le schéma ii) montre le montage après la déformation de l'étape b), ici par insertion d'une goupille 10 montée à demeure et en force dans l'insert 9 qui déforme lui-même la cavité interne radiale 4. Ainsi, après cette déformation, telle que représentée, la cavité interne radiale 4 n'est plus rectangulaire mais ici sensiblement circulaire (alternativement, elle pourrait avoir une section de forme différente). De plus, la surface externe qui était de section carrée/rectangulaire (mais une autre forme pourrait être envisagée) sur le schéma i) comprend des surfaces convexes 8 de chaque côté en vis-à-vis des aimants permanents 5, ces surfaces convexes 8 venant s'insérer dans les surfaces concaves 7 des aimants permanents. Cette déformation peut être continue sur toute la longueur radiale de la portion radiale 3 ou être réalisée sur une ou plusieurs zones « ponctuelles » distinctes séparées les unes des autres.

Pour faciliter le montage et la déformation de la goupille 10, celle-ci peut comprendre une portion sur laquelle la section (de la goupille 10) passe progressivement de la section rectangulaire (c'est-à-dire de la section de l'insert 9 avant déformation) à la section sensiblement circulaire (c'est-à-dire de la section de l'insert 9 après déformation).

La déformation obtenue ici peut être une déformation permanente (dans le domaine plastique du matériau) ou une déformation restant dans le domaine élastique du matériau. Le fait de maintenir la goupille en position permet d'assurer cette déformation par le maintien en position de la goupille, même dans le cas d'une déformation élastique.

La [Fig.7] illustre, de manière schématique et non limitative, une vue du rotor dans un plan orthogonal à la direction axiale d'une deuxième variante d'un rotor de machine électrique selon l'invention.

Le rotor comprend un corps de rotor qui comprend une partie annulaire externe 1 et une partie annulaire interne 2 reliées entre elles par des portions radiales 3 (qui font également partie du corps de rotor). Les portions radiales 3 (ou bras radiaux) sont séparées circonférentiellement de manière à former des ouvertures délimitées d'une part par les parties annulaires externe 1 et interne 2 et d'autre part par deux portions radiales 3 successives circonférentiellement. Dans ces ouvertures, sont positionnées des aimants permanents 5.

Chaque portion radiale 3 comprend une cavité interne radiale 4 utilisée pour déformer la portion radiale 3 afin de bloquer les aimants permanents 5 en vis-à-vis de cette portion radiale 3.

Ici les portions radiales 3 comprennent des ailettes 6 en direction des aimants. Lors de la déformation, les ailettes 6 viennent en contact des aimants permanents 5. Les espaces situés entre les ailettes peuvent ou non se déformer mais ne viennent pas en contact avec les aimants permanents. Ainsi, pour réaliser la déformation des portions radiales, il est possible de prévoir une déformation de la cavité interne radiale 4 seulement au droit des ailettes 6, ce qui forme un contact discontinu entre les portions radiales 3 et les aimants permanents 5. Bien entendu, des déformations locales du même type pourraient être obtenues, sans l'utilisation d'ailettes, sans sortir du cadre de l'invention.

Les principes des figures 2 à 6 peuvent être appliquées à la [Fig.7] au lieu de la [Fig.1].

## Revendications

1. Procédé de de montage des aimants permanents dans un corps de rotor pour former un rotor de machine électrique à flux axial, les aimants permanents (5) comprenant des surfaces concaves (7) s'étendant dans la direction radiale, le corps de rotor étant en matériau amagnétique et comprenant une portion annulaire interne (2) et une portion annulaire externe (1) reliées entre elles par des portions radiales (3), les portions radiales (3) étant espacées circonférentiellement de manière à créer des ouvertures pour le positionnement desdits aimants permanents (5) dans lesdites ouvertures, chaque portion radiale (3) comprenant une cavité interne radiale (4), **caractérisé en ce qu'**on réalise au moins les étapes suivantes :
a) on positionne les aimants permanents (5) dans lesdites ouvertures de manière à ce que les surfaces concaves (7) de chaque aimant permanent (5) soient en vis-à-vis des portions radiales (3) ;
b) on déforme les cavités internes radiales (4) des portions radiales (3) de manière à ce que les surfaces externes de ces portions radiales (3) s'insèrent dans les surfaces concaves (7) des aimants permanents (5) de part et d'autre de chaque portion radiale (3), les surfaces externes formant alors des surfaces convexes (8).

2. Procédé selon la revendication 1, dans lequel ladite cavité interne radiale (4) de chaque portion radiale (3) a une section circulaire, ovale ou rectangulaire ou carrée avant la déformation de l'étape b) et de préférence une section circulaire ou ovale après la déformation de l'étape b).

3. Procédé selon l'une des revendications précédentes, dans lequel l'étape b) de déformation de chaque portion radiale (3) est réalisée par dudgeonnage, hydroformage ou par application d'une pression mécanique, pneumatique ou hydraulique dans la cavité interne radiale (4) de la portion radiale (3).

4. Procédé selon l'une des revendications précédentes, dans lequel la déformation des surfaces externes des portions radiales (3) est continue sur toute la longueur radiale de chaque portion radiale (3) de manière à obtenir un contact entre les aimants permanents (5) et chaque portion radiale (3) sur toute la longueur radiale de la portion radiale.

5. Procédé selon l'une des revendications 1 à 3, dans lequel la déformation des surfaces externes est réalisée de manière à ce que le contact entre la portion radiale (3) et les aimants permanents (5) soit discontinu sur la longueur radiale de la portion radiale (3), les zones de contact étant séparées, de préférence régulièrement, les unes des autres sur la longueur radiale.

6. Procédé selon la revendication 5, dans lequel au moins une desdites portions radiales (3), de préférence chaque portion radiale (3), comprend des ailettes (6), les ailettes (6) venant en contact avec les aimants permanents (5) après l'étape b) de déformation.

7. Procédé selon l'une des revendications précédentes, dans lequel les portions radiales (3) comprennent un ou des matériaux métalliques.

8. Procédé selon l'une des revendications précédentes, dans lequel les portions radiales (3) comprennent des matériaux non métalliques, préférentiellement composites.

9. Procédé selon la revendication 8, dans lequel un insert (9), de préférence métallique, est introduit dans la cavité interne radiale (4) d'au moins une portion radiale (3), de préférence de chaque portion radiale (3), avant la réalisation de l'étape b).

10. Procédé selon la revendication 9, dans lequel l'insert (9) comprend des renforts.

11. Procédé selon l'une des revendications précédentes, dans lequel l'étape b) est réalisée par la mise en place d'une goupille (10) pour déformer la cavité interne radiale (4) d'au moins une desdites portions radiales (3), de préférence de chaque portion radiale (3), la goupille (10) restant à demeure dans le rotor.

12. Procédé de fabrication d'un rotor de machine électrique à flux axial comprenant le procédé de montage selon l'une des revendications précédentes.

13. Rotor de machine électrique à flux axial obtenu par le procédé selon la revendication 12.

14. Machine électrique à flux axial comprenant au moins un rotor selon la revendication précédente et au moins un stator.
